# EUROPÄISCHE PATENTSCHRIFT

(11) **EP 2 198 715 B1**
(45) Veröffentlichungstag und Bekanntmachung des Hinweises auf die Patenterteilung: **25.03.2015**
(21) Anmeldenummer: 09015478.2
(22) Anmeldetag: 15.12.2009
(51) Int. Cl.: A21C 3/02, A21C 3/06

(54) **Verfahren zur Herstellung von mehrlagigen Teigprodukten und Ausrollvorrichtung**
Method for producing multi-layer dough products and rolling device
Procédé de fabrication de produits de pâte à plusieurs couches et dispositif de roulage

(30) Priorität: 17.12.2008 DE 102008062386
(43) Veröffentlichungstag der Anmeldung: 23.06.2010
(73) Patentinhaber: Karasu Feine Backwaren GmbH, 58097 Hagen (DE)
(72) Erfinder: Karasu, Rifan, 58135 Hagen (DE)
(74) Vertreter: Patentanwälte Dörner & Kötter PartG mbB

(56) Entgegenhaltungen:
- WO-A1-97/33822
- DE-C- 328 874
- FR-A1- 2 532 819
- US-A- 1 482 195
- US-A- 2 627 825

## Beschreibung

Die Erfindung betrifft ein Verfahren zur Herstellung von mehrlagigen Teigprodukten aus einer Teigmasse.

Der Begriff "mehrlagige Teigprodukte" umfasst insbesondere solche Teigprodukte, die im Allgemeinen als "feine Backwaren" bezeichnet werden und zu denen beispielsweise Blätterteig gezählt wird. Der Blätterteig ist ein mehrlagiger Ziehteig, der lediglich aus Mehl, Salz und Wasser besteht und bei dessen Herstellung keine Triebmittel eingesetzt werden. Durch mehrfaches Ausrollen und Zusammenfalten einer Teigmasse entstehen die für den Blätterteig charakteristischen Teiglagen, wobei vor jedem Zusammenfalten eine bestimmte Menge an Fett aufgebracht wird. Das schichtweise Einarbeiten des Fettes in den Teig wird Tourieren genannt. Der Fachmann unterscheidet dabei, abhängig davon, wie häufig der Prozess des Ausrollens und Zusammenfaltens vollzogen wird, zwischen einfachem und mehrfachen Touren, In der Fachsprache wird auch von "Einziehen" gesprochen. Ein Blätterteig bekommt - mit entsprechenden Pausen - in der Regel zwei einfache Touren und zwei doppelte Touren. Bei der klassischen Zubereitungsvariante mit sechs einfachen Touren kann das Teigprodukt letztlich mehr als 700 Teiglagen aufweisen.

Während des Backvorgangs gehen die Teiglagen locker und blättrig auf, Dieser Effekt wird durch den im Gebäck entstehenden Wasserdampf hervorgerufen. Durch die Hitze verdampft das in der Teigmasse vorhandene Wasser, dehnt sich dabei aus und hebt das Gebäck an. Die Fettschichten wirken dabei wie eine Sperre und halten den Wasserdampf in der Teiglage bis das Teiggerüst stabil gebacken ist.

Eine andere Form eines als Blätterteiggebäck ausgebildeten mehrlagigen Teigprodukts ist das sogenannte Baklava, ein Gebäck aus Blätterteig, das beispielsweise mit Nüssen oder Früchten gefüllt werden kann und aus einer Mehrzahl von unabhängigen Teiglagen besteht. Diese Teiglagen stellen einen wesentlichen Unterschied zu den tourierten Blätterteiggebäcken dar, da sie nicht miteinander verbunden sind, Bei der Baklavaherstellung erfolgt kein Tourieren des Grundteigs, sondern zunächst ein Ausrollen von einzelnen Teigportionen zu einschichtigen Teiglagen, die anschließend unter Einsatz eines von Fett verschiedenen Trennmittels, z.B. Stärkepulver, übereinandergelegt und gemeinsam ausgewalzt werden. Bei dem Auswalzen muss darauf geachtet werden, dass der Teig nicht zu stark belastet und möglicherweise beschädigt wird. Durch wiederholtes Aufstreuen des Trennmittels wird eine dauerhafte Trennung der einzelnen Lagen erreicht. Anschließend wird eine Vielzahl von Teiglagen in einem Backblech übereinandergelegt und mit flüssigem Fett übergossen, so dass das Fett zwischen die Teiglagen einziehen kann und eine ergänzende Trennwirkung hat. Das Fett dient während des Backvorgangs zudem als Sperrschicht für den entstehenden Wasserdampf.

Da der Baklavateig nicht touriert wird, erfolgt das maschinelle Auswalzen üblicherweise nur in einer Richtung, so dass starke Spannungen im Teig entstehen können und der Teig beschädigt werden kann. Hierzu werden handelsübliche Ausrollmaschinen verwendet, die meist aus einer Walzvorrichtung und einer Fördervorrichtung bestehen, also im Unterschied zu einer Ausrollvorrichtung keine Wickelvorrichtung aufweisen. Bei Verwendung einer Ausrollmaschine besteht zudem der Nachteil, dass die üblicherweise in handwerklichen Betrieben eingesetzten Ausrollmaschinen Teigmassen nur bis zu einer bestimmten Minimaldicke auswalzen können und dünne Teiglagen dadurch beschädigt werden, dass sie beim Auswalzen an einer der Walzen hängen bleiben. Aus diesen Gründen erfolgt die Nachbearbeitung des Teigs bei der Baklava-Herstellung manuell, was zu einem erheblichen Arbeitsmehraufwand führt.

Die US 2 627 825 offenbart ein Verfahren gemäß dem Oberbegriff des Anspruchs 1.

Der vorliegenden Erfindung liegt daher die Aufgabe zu Grunde ein Verfahren anzugeben, das die Herstellung von mehrlagigen Teigprodukten aus einer Teigmasse, insbesondere die Herstellung von Baklava, vereinfacht und die vorgenannten Nachteile - zumindest teilweise - vermeidet.

Die vorgenannte Aufgabe wird erfindungsgemäß durch ein Verfahren mit den Merkmalen des Patentanspruchs 1 gelöst.

Erfindungsgemäß ist also vorgesehen, dass die Teigmasse in einer Walzrichtung zu einer möglichst dünnen Teiglage ausgewalzt wird, wobei die Dicke der Teiglage dabei bevorzugt dem Minimalwalzenabstand der verwendeten Ausrollvorrichtung entspricht, ohne dass der Teig beschädigt wird, Aus der Teigmasse wird dadurch eine lange, in einer Richtung ausgewalzte Teiglage. Diese Teiglage wird zu wenigstens einer zusammenhängenden Mehrlagenanordnung übereinandergelegt. Die zusammenhängende Mehrlagenanordnung besteht folglich aus einer Teiglage, die in mehreren Lagen übereinanderliegt. Dabei kann das Übereinanderlegen der Teiglage derart erfolgen, dass jeweils eine Flachseite der Teiglage nur mit der anderen Flachseite der Teiglage in Kontakt tritt, aber auch derart, dass die beiden Flachseiten der Teiglage abwechselnd mit sich selbst in Kontakt treten. Das beschriebene Verfahren ist nicht auf die Herstellung von Blätterteigen beschränkt, ist hierfür aber, insbesondere nämlich für die Herstellung von Baklava, erwiesenermaßen hervorragend geeignet.

Die zusammenhängende Mehrlagenanordnung wird nachfolgend, beispielsweise durch einen Schnitt, wenigstens einmal vollständig durchtrennt, so dass aus der zusammenhängenden Mehrlagenanordnung wenigstens eine unzusammenhängende Mehrlagenanordnung entsteht, d.h. die Teiglage zu einer Mehrzahl von unabhängigen Teiglagen durchtrennt wird, Dabei hat es sich als vorteilhaft herausgestellt, die Teiglage wenigstens einmal zu durchtrennen, besonders Teiglage wenigstens einmal zu durchtrennen, besonders bevorzugt ist jedoch das vollständige Durchtrennen der Teiglage an wenigstens zwei Stellen durchzuführen.

Das Verfahren sieht weiterhin ein Auswalzen der unzusammenhängenden Mehrlagenanordnung vor, wodurch die Dicke jeder - nun vereinzelten - Teiglage reduziert wird. Wahlweise kann dieser Auswalzvorgang auch vor dem Durchtrennen der zusammenhängenden Mehrlagenanordnung stattfinden, so dass die unzusammenhängende Mehrlagenanordnung erst nach dem Auswalzvorgang entsteht.

Bei einer bevorzugten Ausgestaltung des Verfahrens erfolgt das Übereinanderlegen der Teiglage zu einer zusammenhängenden Mehrlagenanordnung durch Aufwickeln der Teiglage auf einen Wickelkern, Dabei wird die Teiglage von einer Fördervorrichtung einer Ausrollvorrichtung an ein Ende der Ausrollvorrichtung befördert und durch einen rotierenden Wickelkern auf genommen, Die Rotationsachse des Wickelkerns verläuft - bei einer vorteilhaften Ausgestaltung - parallel zu der Abschlusskante der Fördervorrichtung, an der der Teig diese verlässt. Durch das Aufwickeln auf den Wickelkern wird die Teiglage regelmäßig übereinandergelegt und besteht anschließend aus einer zusammenhängenden Mehrlagenanordnung. Durch den im Verfahren vorgesehenen Trennvorgang wird die Mehrlagenanordnung von dem Wickelkern getrennt und gleichzeitig in eine unzusammenhängende Mehrlagenanordnung überführt. Vorzugsweise wird die unzusammenhängende Mehrlagenanordnung nachfolgend in der Ausrollvorrichtung weiterverarbeitet.

Alternativ zu dem Aufwickeln durch einen rotierenden Wickelkern kann auch ein Wickelkern vorgesehen sein, der einen um den Wickelkern bewegbaren Teigmitnehmer aufweist, so dass der Teig durch das Bewegen des Teigmitnehmers auf den Wickelkern gewickelt wird. Der Teigmitnehmer ist beispielsweise als ein um den Wickelkern umlaufendes Förderband oder als Fördergurt ausgestaltet, so dass das um den Wickelkern rotierende Förderband den Teig mitnimmt und durch die Rotationsbewegung auf den Wickelkern aufwickelt. Der Wickelkern selbst rotiert dabei nicht, Durch das Aufwickeln mittels des Teigmitnehmers werden auf dem Wickelkern die Teiglagen regelmäßig übereinander gelegt, so dass eine zusammenhängende Mehrlagenanordnung auf dem Wickelkern entsteht.

Das Verfahren bietet den Vorteil, dass mit geringem Aufwand aus einer Teiglage eine weiterverarbeitbare Mehrlagenanordnung mit einer Vielzahl von übereinanderliegenden, unabhängigen Teiglagen erstellt werden kann. Zudem ist es vorteilhaft, dass diese Mehrlagenanordnung aufgrund ihrer Dicke in einer herkömmlichen Ausrollvorrichtung weiterverarbeitet werden kann und die manuelle Nachbearbeitung somit entfällt, dies gilt insbesondere und in besonderem Maße für untourierte Teige, wie z.B. Baklava.

Eine weitere vorteilhafte Variante des Verfahrens sieht vor, dass das Übereinanderlegen der Teiglage mäanderförmig erfolgt. Das wird insbesondere dadurch gewährleistet, dass die Teiglage von einer Förderebene im Wesentlichen vertikal auf eine Sammelfläche geführt wird, die in horizontaler Richtung oszillierend bewegt werden kann. Eine bevorzugte Ausgestaltung dieser Variante beinhaltet, dass die Teiglage von der Ebene der Fördervorrichtung, von oben auf eine niedrigere Ebene herangeführt bzw. herabgelassen wird, die sich in horizontaler Richtung oszillierend bewegen kann, wodurch ein mäanderförmiges Übereinanderlegen der Teiglage erfolgt. Die oszillierende Bewegung erfolgt dabei bevorzugt parallel zur Förderrichtung der Fördervorrichtung. Das Durchtrennen der mäanderförmig übereinanderliegenden Teiglage an zwei gegenüberliegenden Seiten führt zu wenigstens einer unzusammenhängenden Mehrlagenanordnung, bzw. zu einer Anordnung einer Vielzahl von übereinanderliegenden Teiglagen, die nachfolgend ausgewalzt werden.

Eine bevorzugte Ausgestaltung des erfindungsgemäßen Verfahrens sieht vor, dass das Auswalzen der unzusammenhängenden Mehrlagenanordnung in einer zur Auswalzrichtung der Teigmasse bzw. der Teiglage abweichenden Richtung erfolgt. Wenn der Teig ohne diesen Wechsel der Auswalzrichtung ausgewalzt wird, erfolgt die Längung des Teigs nur in einer Richtung, wodurch der Teig strapaziert und möglicherweise beschädigt wird. Der Wechsel der Ausrollrichtung hat den Vorteil, dass sich die Längung des Teiges in verschiedenen Richtungen vollzieht und der Teig gleichmäßig belastet wird, wodurch die Gefahr einer Beschädigung erheblich vermindert wird und der Teig bzw. die Teiglage bzw. die Mehrlagenanordnung strapazierfähiger hinsichtlich einer weiteren Verarbeitung ist. Als vorteilhaft hat sich herausgestellt, die unzusammenhängende Mehrlagenanordnung in einem Winkel von im Wesentlichen 90° zur Walzrichtung der Teigmasse zu drehen und die Auswalzung dann vorzunehmen. Die Längung des Teiges erfolgt somit in einer Richtung, die etwa um 90° zur ursprünglichen Längungsrichtung gedreht ist. Durch die gleichmäßige Belastung können zudem geringere Teigdicken erzielt werden.

Als besonders vorteilhaft hat es sich herausgestellt, dass ein Trennmittel auf wenigstens einen Teil der Oberfläche der Teiglage aufgegeben wird, so dass die Teiglagen der zusammenhängenden Mehrlagenanordnung, bzw. die Teiglagen der unzusammenhängenden Mehrlagenanordnung nicht aneinander haften. Dabei ist es besonders vorteilhaft, ein streufähiges, insbesondere ein pulverförmiges Trennmittel zu verwenden, z.B. Mehl, Stärkepulver oder weitere pulverförmige Trennmittel, bevorzugt ein stärkehaltiges Trennmittel. Das Aufgeben des Trennmittels kann automatisiert oder manuell, wahlweise auch in festen Zeitintervallen oder kontinuierlich erfolgen. Bevorzugt wird jedoch gewährleistet, dass einerseits nicht zu viel Mehl vom Teig aufgenommen wird und andererseits, dass die Teiglagen nicht aneinander haften.

Das erfindungsgemäße Verfahren kann bevorzugt mit einer weiteren Ausrollvorrichtung für Teigmassen erfolgen, mit einer Walzvorrichtung, einer Fördervorrichtung und einer Wickelvorrichtung, wobei die Wickelvorrichtung einen Wickelkern aus zwei beabstandeten Wickelholmen aufweist, wobei die Wickelholme einen Abstand aufweisen, der einem Vielfachen des Abmaßes ihres Querschnitts entspricht. Der Abstand der Wickelholme entspricht dabei beispielsweise etwa der Breite der Fördervorrichtung bzw. der Teiglage, so dass die auf dem Wickelkern entstehende Mehrlagenanordnung im Wesentlichen eine rechteckige, insbesondere quadratische, Grundfläche aufweist. Der Wickelkern aus den Wickelholmen weist dabei keine Auflageflächen auf, sondern die Teiglage ist zwischen den Wickelholmen gespannt. Die Wickelholme dienen dabei lediglich dem Umlenken der Teiglage an den jeweiligen Stirnseiten. Die Teiglage weist dafür eine ausreichende Stabilität auf, so dass sie nicht während des Aufwickelns auf die Wickelholme im Bereich zwischen den Wickelholmen durchhängt oder reißt Auf den Wickelholmen bzw. zwischen den Wickelhohnen entsteht so eine gleichmäßige Mehrlagenanordnung.

Das erfindungsgemäße Verfahren kann insbesondere auch durch eine Ausrollvorrichtung für Teigmassen erfolgen, mit einer Walzvorrichtung, einer Fördervorrichtung und einer Wickelvorrichtung, wobei die Wickelvorrichtung einen Wickelkern mit wenigstens einer im Wesentlichen ebenen Ablagefläche aufweist. Dies hat den Vorteil, dass wenigstens im Bereich der Ablagefläche Teiglagen aufeinanderlegbar sind, die - insbesondere nach Durchtrennen der zuvor erläuterten zusammenhängenden Mehrlagenanordnung zu einer unzusammenhängenden Mehrlagenanordnung - deckungsgleich sind; dies ist bei gewölbten Ablageflächen naturgemäß nicht gegeben.

Dabei kann der Wickelkern wenigstens einen um den Wickelkern bewegbaren Teigmitnehmer aufweisen, so dass der Teig durch das Bewegen des Teigmitnehmers auf den Wickelkern gewickelt wird. Während des Aufwickelvorgangs der Teiglage wird der Wickelkern selbst nicht bewegt, sondern lediglich der auf dem Wickelkern angeordnete Teigmitnehmer, der beispielsweise als Förderband ausgestaltet ist, rotiert um den Wickelkern, so dass die Teiglage auf den Wickelkern durch den Teigmitnehmer zu einer Mehrlagenanordnung aufgewickelt wird. Die Breite des beispielsweise als Förderband oder Fördergurt ausgestalteten Teigmitnehmers entspricht dabei im Wesentlichen der Breite des Wickelkerns, mindestens jedoch der Breite der Teiglage. Als besonders vorteilhaft hat sich dabei herausgestellt, wenn der Teigmitnehmer bzw. das Förderband eine Befestigungslasche aufweist, so dass der Beginn der Teiglage mit seiner gesamten Breite in der Befestigungslasche befestigbar ist, so dass die Teiglage gleichmäßig von dem Teigmitnehmer mitgenommen und um den Wickelkern zu einer Mehrlagenanordnung aufgewickelt wird.

Vorteilhaft ist, wenn die Erstreckung des Wickelkerns in einer Hauptrichtung größer ist als in einer Nebenrichtung, wobei die Hauptrichtung in einer Ebene mit der Rotationsachse des Wickelkerns liegt und orthogonal zur Rotationsachse orientiert ist, und die Nebenrichtung orthogonal zu der Ebene und zur Rotationsachse verläuft. Wenn von der "Erstreckung des Wickelkerns in einer Hauptrichtung, wobei die Hauptrichtung in einer Ebene mit der Rotationsachse des Wickelkerns liegt" die Rede ist, dann ist dies nicht einengend so zu verstehen, das die Rotationsachse im Randbereich des Wickelkerns liegt, die Richtung also radial von der Achse wegweist, vielmehr ist damit auch die gegenläufige Richtung gemeint; die Rotationsachse des Wickelkerns liegt üblicherweise also in einem mittigen Bereich des Wickelkerns.

Ebenfalls als vorteilhaft für die Durchführung des erfindungsgemäßen Verfahrens ist es, wenn die Berandungslinie des Wickelkerns einer senkrecht zur Rotationsachse orientierten Schnittfläche des Wickelkerns ein Polygon bildet, insbesondere ein konvexes Polygon, bevorzugt ein regelmäßiges Polygon, besonders bevorzugt ein Dreieck, ein Rechteck, eine Raute oder ein Trapez, so dass der Wickelkern eine Vielzahl von Ablageflächen aufweist. Die Ecken und Kanten des Polygons sind dabei vorzugsweise abgerundet, damit der Teig beim Aufwickeln nicht beschädigt wird. Durch die vorzugsweise gleichlangen Abschnitte des Polygons kann gewährleistet werden, dass die Ablageflächen und damit die erhaltenen Mehrlagenanordnungen im Wesentlichen die gleiche Größe haben - also kongruent sind - und so ohne Anpassung miteinander weiterverarbeitet werden können.

Durch eine derartige Gestaltung des Wickelkerns kann gewährleistet werden, dass nach dem Durchtrennen der Teiglagen - bevorzugt an den Stirnseiten mit der geringeren Erstreckung - wenigstens eine unzusammenhängende Mehrlagenanordnung vorliegt, die einen flächigen Charakter hat und somit einfach, z.B. in einer Ausrollvorrichtung, weiterverarbeitet werden kann. Die Wickelvorrichtung ist an einem Ende der Fördervorrichtung der Ausrollvorrichtung angeordnet, so dass die Teiglage nach dem erstmaligen Auswalzen von der Wickelvorrichtung aufgenommen werden kann. Als sehr vorteilhaft hat es sich herausgestellt, wenn der Wickelkern mit seiner Rotationsachse derart in einer Halterung gelagert wird, dass er aus dieser mit geringem Aufwand entnehmbar ist. Hierdurch wird die verfahrensgemäße Drehung der Auswalzrichtung der Teiglagen wesentlich vereinfacht, da die gesamte zusammenhängende Mehrlagenanordnung mit dem Wickelkern bewegt und gedreht werden kann, und eine einfache Änderung der Auswalzrichtung möglich ist.

Vorteilhaft verläuft die Rotationsachse des Wickelkerns durch dessen geometrischen Mittelpunkt so dass gewährleistet ist, dass der Rotationsvorgang des Wickelkerns gleichmäßig ablaufen kann. Falls der Schwerpunkt des Wickelkerns von dessen geometrischem Mittelpunkt abweicht, beispielsweise durch materialabhängige Gewichtsverlagerung, muss eine Positionierung der Rotationsachse durch den Schwerpunkt vorgesehen werden, um ebenfalls einen gleichmäßigen Rotationsvorgang zu gewährleisten.

Weist der Wickelkern rechteckige Oberflächen - Ablageflächen - auf, insbesondere die mit der Teiglage in Kontakt tretenden Oberflächen, sind gleichmäßige Ablageflächen für die Teiglage gewährleistet, so dass die zusammenhängende und die unzusammenhängende Mehrlagenanordnung einen flächigen Charakter aufweisen und problemlos in der Ausrollvorrichtung weiterverarbeitet werden können, Zudem ist dadurch gewährleistet, dass nach dem Trennvorgang alle Teiglagen eine im Wesentlichen einheitliche Größe aufweisen. Weist der Wickelkern eine Breite - gemeint ist die Erstreckung entlang der Rotationsachse -, auf, die im Wesentlichen der Breite der Fördervorrichtung entspricht, wird sichergestellt, dass die Teiglage ohne Faltenwurf und mit geringem Aufwand auf den Wickelkern aufgewickelt werden kann. Besonders vorteilhaft ist es zusätzlich, wenn die Höhe des Wickelkerns - gemeint ist die Erstreckung in eine Hauptrichtung, die mit der Rotationsachse in einer Ebene liegt und orthogonal zur Rotationsachse verläuft - auch etwa der Breite der Fördervorrichtung entspricht. Hierdurch ist es möglich, die zusammenhängende Mehrlagenanordnung mitsamt dem Wickelkern um einen Winkel von 90° zu drehen, die zusammenhängende Mehrlagenanordnung von dem Wickelkern zu trennen und anschließend die nunmehr unzusammenhängende Mehrlagenanordnung - die nach dem Drehen im Wesentlichen die Breite der Ausrollvorrichtung aufweist - der Ausrollvorrichtung zuzuführen. Die Drehung der zusammenhängenden oder unzusammenhängenden Mehrlagenanordnung erfolgt dabei bevorzugt in einer horizontalen Ebene.

Um den Teig besonders schonend und ohne Beschädigung auf den Wickelkern aufzubringen, hat es sich als günstig herausgestellt, wenn wenigstens eine Stirnfläche des Wickelkerns abgerundet ist. Besonders vorteilhaft ist es, wenn wenigstens zwei gegenüberliegende Stirnflächen abgerundet sind. Die Realisierung der Abrundung kann beispielsweise dadurch erfolgen, dass wenigstens eine Kante der Stirnfläche einen Radius aufweist oder halbrunde Ansatzstücke angebracht sind.

Vorteilhaft ist es, wenn bei Durchführung des erfindungsgemäßen Verfahrens die Rotationsbewegung des Wickelkerns manuell erfolgen kann, d.h. durch eine Person derart hervorrufbar ist, dass der Teig gleichmäßig und ohne Faltenwurf auf den Wickelkern aufgewickelt wird. Dabei ist darauf zu achten, dass die Wickelgeschwindigkeit nicht zu niedrig ist, wodurch Falten entstehen könnten, zugleich darf die Wickelgeschwindigkeit jedoch auch nicht zu groß sein, da ansonsten ein Reißen des Teiges die Folge wäre. Hierzu sollte die Rotationsbewegung des Wickelkerns direkt oder indirekt auf die Laufgeschwindigkeit der Fördervorrichtung abgestimmt sein, so dass gewährleistet ist, dass ein gleichmäßiges Aufwickeln des Teiges auf den Wickelkern erfolgt.

Zur Gewährleistung einer gleichmäßigen Rotationsbewegung des Wickelkerns wird deshalb empfohlen, dass die Rotationsbewegung direkt oder indirekt von einer Arbeitsmaschine herbeiführbar ist, wodurch eine gleichmäßige, konstante Rotationsgeschwindigkeit des Wickelkerns möglich ist und eine Beschädigung des Teiges verhindert werden kann. Dabei kann die Übertragung des Antriebsdrehmoments beispielsweise über ein Getriebe, eine Kette oder einen Antriebsriemen erfolgen. Dabei ist es sehr vorteilhaft, wenn die mittlere Umfangsgeschwindigkeit des rotierenden Wickelkerns im Wesentlichen der Fördergeschwindigkeit der Fördervorrichtung entspricht.

Zur Durchführung des Verfahrens ist es weiterhin vorteilhaft, wenn an mindestens einer Stirnfläche des Wickelkerns eine Schneidvorrichtung angebracht ist, die beispielsweise im Wickelkern versenkbar ist. Diese Schneidvorrichtung lässt sich entlang einer Stirnfläche des Wickelkerns führen und verursacht die Durchtrennung der Teiglagen der zusammenhängenden Mehrlagenanordnung, die auf den Wickelkern aufgewickelt ist. Sehr bevorzugt ist es, wenn an wenigstens zwei Stirnflächen eine solche Schneidvorrichtung vorgesehen ist, um ein vorteilhaftes zweiseitiges Durchtrennen der zusammenhängenden Mehrlagenanordnung zu ermöglichen. Als vorteilhaft hat es sich zudem herausgestellt, wenn anstelle der Schneidvorrichtung eine Führungsvorrichtung für eine Schneidvorrichtung an wenigstens einer Stirnfläche vorgesehen, in der beispielsweise ein Messer oder eine Schneidrolle zum Durchtrennen der Teiglagen geführt werden kann. Auch dabei ist es vorteilhaft, wenn die Führungsvorrichtung an zwei Stirnflächen vorgesehen ist. Die Führungsvorrichtung kann beispielsweise als eingelassenes U-Profil aus einem gegen Schnittwirkung widerstandsfähigen Material bestehen, wodurch ein richtungstreuer Schnitt entlang des Wickelkerns möglich ist.

Vorteilhaft ist es weiterhin, wenn die Rotationsachse des Wickelkerns in der Ebene der Fördervorrichtung liegt, wodurch ein gleichmäßiger Übergang der Teiglage auf den Wickelkern gewährleistet ist. Alternativ ist die Positionierung der Rotationsachse bei einer bevorzugten Ausgestaltung oberhalb dieser Ebene möglich, besonders bevorzugt jedoch unterhalb dieser Ebene. Stets ist ein günstiger und beschädigungsfreier Übergang der Teiglage auf den Wickelkern zu gewährleisten und sicherzustellen, dass die Teiglage nur in geringem Maße von der Fördervorrichtung abhebt.

Für die Wahl des Materials sind auch hygienische Gesichtspunkte zu beachten. Der Wickelkern muss mit geringem Aufwand zu reinigen sein und darf keine Schadstoffe beinhalten, die an den Teig abgegeben werden könnten. Beispielsweise kann der Wickelkern im Wesentlichen aus Holz bestehen. Durch eine einfache Verarbeitbarkeit und Handhabung ist eine kostengünstige Fertigung aus Holz möglich. Alternativ kann der Wickelkern aus einem Metall bestehen, da die Oberflächen verschleißarm und einfach zu reinigen sind. Ein möglicher Nachteil könnte das höhere Gewicht sein. Für die Herstellung eines Wickelkerns aus einem Metall ist insbesondere die Verwendung von Aluminium oder einem hochlegierten Stahl zielführend. Ein besonders bevorzugtes Material für den Wickelkern ist Kunststoff, da Kunststoffe einfach zu verarbeiten sind, eine lange Lebensdauer aufweisen und einfach zu reinigen sind. Denkbar ist auch die Verwendung eines Wickelkerns aus einer Kombination von verschiedenen Werkstoffen. Für die Bereiche an der Ausrollvorrichtung, die Reibung und/oder Verschleiß ausgesetzt sind, z.B. Achse und Führungsschienen der Schneidvorrichtung, ist vorzugsweise ein entsprechend verschleißarmer Werkstoff, insbesondere Aluminium oder ein hochlegierter Stahl, zu wählen.

Die Wickelvorrichtung kann sowohl auf einem separaten Rahmen positioniert sein als auch mit einer Haltevorrichtung fest in die Ausrollvorrichtung integriert sein, Die Positionierung der Wickelvorrichtung erfolgt dabei an einem Rinde der Fördervorrichtung, so dass der Teig nach dem Auswalzen direkt auf die Wickelvorrichtung übernommen werden kann. Falls die Wickelvorrichtung fest in die Ausrollvorrichtung integriert ist, sind die Halterungen vorzugsweise schwenkbar und/oder abnehmbar ausgestaltet, damit ein Entfernen der Wickelvorrichtung für eine anderweitige Verwendung der verbleibenden Bestandteile der Ausrollvorrichtung möglich ist. Die Befestigung der Wickelvorrichtung an einem eigenständigen Rahmen bietet den Vorteil, dass sie zusammen mit bereits vorhandenen Ausrollmaschinen - als Modul zur Nachrüstung - verwendet werden kann. Hierdurch wird mit der Baklava-Herstellung ein neues Anwendungsfeld für herkömmliche Ausrollmaschinen eröffnet.

Bei einer geeigneten Ausrollvorrichtung wiest der separate Rahmen mindestens ein auf einer Seite der zu verarbeiteten Teigbahn positioniertes Seitenteil auf, insbesondere auf beiden Seiten der Teigbahn ein Seitenteil auf, wobei insbesondere das oder die Seitenteile bezüglich ihrer Höhe verstellbar sind, bevorzugt mit der Höhe des Seitenteils die Höhe der Rotationsachse einstellbar ist, wobei die Rotationsachse des Wickelkerns oberhalb, bevorzugt in, besonders bevorzugt unterhalb der Ebene der Fördervorrichtung liegt. Der Wickelkern ist auf einer Seite oder beidseitig an dem Seitenteil bzw. den Seitenteilen gelagert, so dass die Teiglage auf den Wickelkern aufwickelbar ist. Die Höhe des Wickelkerns bzw. der Rotationsachse ist vorteilhaft über die verstellbare Höhe des Seitenteils bzw. der Seitenteile einstellbar. So kann der separate Rahmen mit bereits vorhandenen Ausrollmaschinen verwendet werden, insbesondere dann, wenn verschiedene Ausrollmaschinen unterschiedliche Höhen des Förderbandes aufweisen.

Für den Fall, dass der Wickelkern einen um den Wickelkern rotierenden Teigmitnehmer aufweist, ist mit der Höhenverstellung des Seitenteils die Höhe des Wickelkerns und damit die Höhe des Teigmitnehmers einstellbar, obwohl der Wickelkern selbst während des Aufwickelns nicht rotiert.

Im Einzelnen gibt es eine Vielzahl von Möglichkeiten das erfindungsgemäße Verfahren zur Herstellung von mehrlagigen Teigprodukten auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen:
- Fig. 1: einen ersten bevorzugten Verfahrensablauf des erfindungsgemäßen Verfahrens,
- Fig. 2: einen zweiten bevorzugten Verfahrensablauf des erfindungsgemäßen Verfahrens,
- Fig. 3: die Seitenansicht einer ersten zur Durchführung des Verfahrens geeigneten Ausrollvorrichtung, mit der Wickelvorrichtung auf einen unabhängigen Rahmen,
- Fig. 4: die Seitenansicht einer zweiten zur Durchführung des Verfahrens geeigneten Ausrollvorrichtung, mit fest in die Ausrollvorrichtung integrierter Wickelvorrichtung und
- Fig. 5: geeignete Ausführungen eines Wickelkerns in der Seitenansicht.

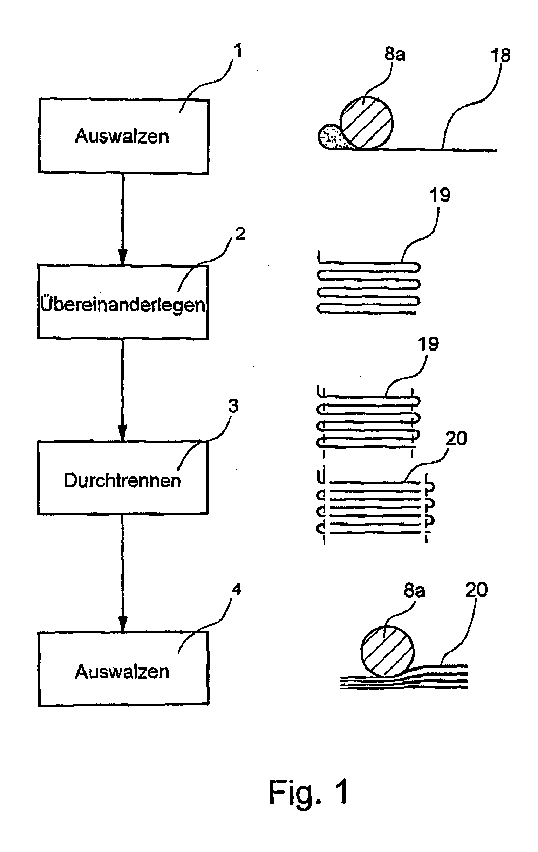

Fig. 1 zeigt einen ersten bevorzugten Verfahrensablauf für das erfindungsgemäße Verfahren und eine schematische Darstellung der Verfahrensschritte, Die Teigmasse wird von einer Walze 8a zunächst zu einer Teiglage 18 ausgewalzt - Auswalzen 1 -, Die Teiglage 18 wird anschließend zu wenigstens einer zusammenhängenden Mehrlagenanordnung 19 übereinandergelegt - Übereinanderlegen 2 -, Die zusammenhängende Mehrlagenanordnung 19 wird nachfolgend derart durchtrennt, dass wenigstens eine unzusammenhängenden Mehrlagenanordnung 20 entsteht - Durchtrennen 3 -. Abschließend wird die unzusammenhängende Mehrlagenanordnung 20 mit einer Walze 8a ausgewalzt - Auswalzen 4 -.

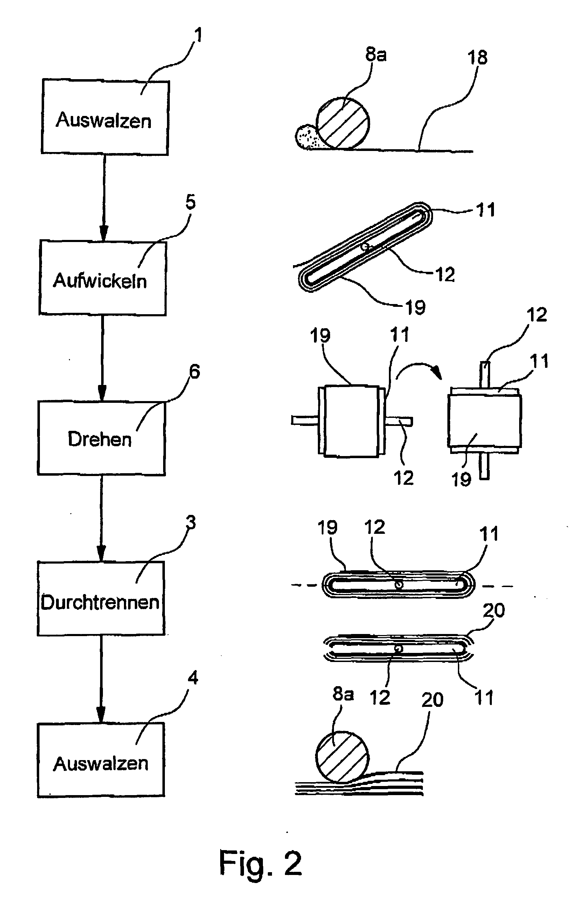

Fig. 2 zeigt einen besonders bevorzugten Verfahrensablauf des erfindungsgemäßen Verfahrens und die zugehörigen schematisch dargestellten Verfahrensschritte. Die Teigmasse bzw. die Teiglage 18 wird zunächst mittels einer Walze 8a ausgewalzt 1. Die resultierende Teiglage 18 wird anschließend auf einen Wickelkern 11 aufgewickelt 5, so dass eine zusammenhängende Mehrlagenanordnung 19 entsteht. Der Wickelkern 11 mit der aufgewickelten, zusammenhängenden Mehrlagenanordnung 19 wird nachfolgend um einen bestimmten Winkel gedreht 6. Die zusammenhängende Mehrlagenanordnung 19 wird derart durchtrennt 3, dass wenigstens eine unzusammenhängende Mehrlagenanordnung 20 entsteht. Abschließend wird die unzusammenhängende Mehrlagenanordnung 20 mittels einer Walze 8a ausgewalzt 4. Durch diesen Ablauf wird der gesamte Herstellungsprozess von mehrlagigen Teigprodukten, insbesondere Baklava, wesentlich vereinfacht und der Arbeitsaufwand nennenswert reduziert.

Bei einer weiteren, hier nicht dargestellten Variante des Verfahrens wird die durch Aufwickeln 5 erhaltene zusammenhängende Mehrlagenanordnung 19 zunächst durchtrennt 3 und nachfolgend die so erhaltene unzusammenhängende Mehrlagenanordnung 20 gedreht 6 und weiter ausgewalzt 4.

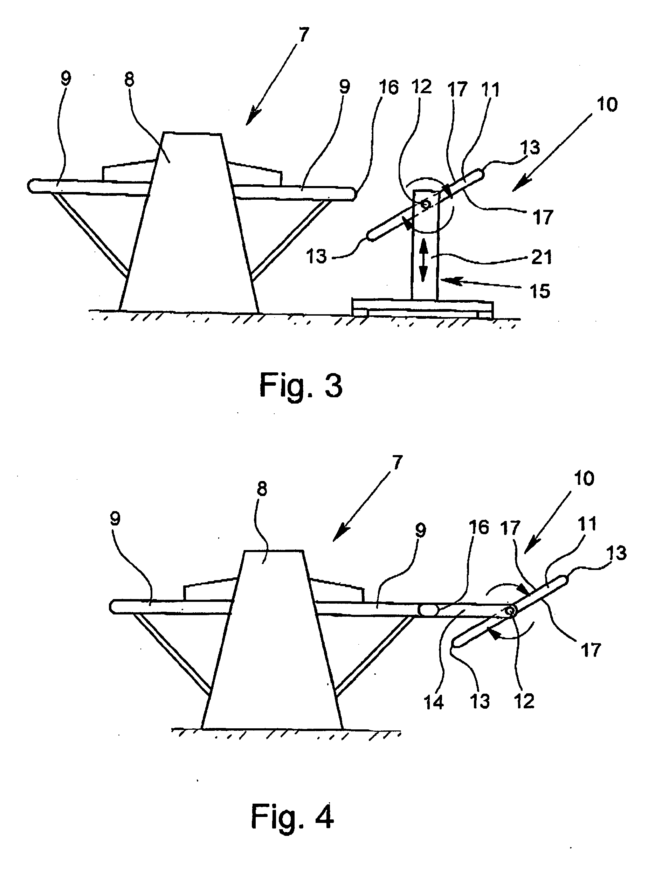

Fig. 3 zeigt die Seitenansicht einer zur Durchführung des Verfahrens geeigneten Ausrollvorrichtung 7, mit einer Walzvorrichtung 8, einer Fördervorrichtung 9 und einer Wickelvorrichtung 10. Die Walzvorrichtung 8 beinhaltet wenigstens eine Walze. Die Wickelvorrichtung 10 weist einen Wickelkern 11 auf, der wenigstens eine im Wesentlichen ebene Ablagefläche 17 aufweist. Der Wickelkern 11 ist bei dieser Variante auf einem separaten Rahmen 15 angebracht und weist etwa die Breite der Fördervorrichtung 9 auf. Dabei ist die Erstreckung des Wickelkerns 11 in einer Hauptrichtung größer als in einer Nebenrichtung, wobei die Hauptrichtung in einer Ebene mit der Rotationsachse 12 des Wickelkerns 11 liegt und orthogonal zur Rotationsachse 12 orientiert ist, und die Nebenrichtung orthogonal zu der Ebene und zur Rotationsachse 12 verläuft.

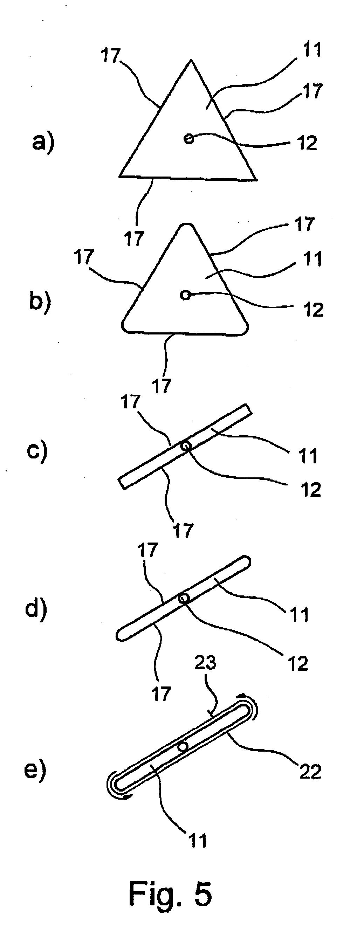

Der separate Rahmen 15 weist dabei ein höhenverstellbares Seitenteil 21 auf, wobei an dem Seitenteil 21 der rotierbare Wickelkern 11 befestigt ist. Das Seitenteil 21 ist dabei in Richtung des Doppelpfeiles in Fig. 3 höhenverstellbar, so dass die Höhe der Rotationsachse 12 bzw. die Höhe des Wickelkerns 11 auf jede beliebige Höhe eingestellt werden kann. An einem solchen Rahmen sind sämtliche Varianten eines Wickelkerns - siehe Fig. 5 - befestigbar.

Die Rotationsachse 12 befindet sich unterhalb der Ebene der Fördervorrichtung 9 und verläuft parallel zur Abschlusskante 16 der Fördervorrichtung 9. Die Wickelvorrichtung 10 wird bei dieser Variante manuell betrieben. Bei dem Wickelkern 11 handelt es sich um einen Wickelkern 11 mit rechteckigen Ablageflächen 17 und an zwei gegenüberliegenden Seiten abgerundeten Kanten 13. Die Teigmasse kann nun mit der Ausrollvorrichtung 7 ausgewalzt werden und von der Fördervorrichtung 9 zur Wickelvorrichtung 10 befördert werden. Der Wickelkern 11 dreht sich bevorzugt in die durch die Pfeile angedeutete Richtung und wickelt dadurch die nicht dargestellte Teiglage auf.

Fig. 4 zeigt die Seitenansicht einer weiteren zur Durchführung des Verfahrens geeigneten Ausrollvorrichtung. Es gelten die gleichen Bezugszeichen wie in Fig. 3. Die Wickelvorrichtung 10 ist bei dieser Variante an einem Ende der Fördervorrichtung 9 der Ausrollvorrichtung 7 vorgesehen und fest in die Ausrollvorrichtung 7 integriert. Der Wickelkern 11 kann sich frei um seine Rotationsachse 12 drehen und kann die ausgewalzte Teiglage am Ende der Fördervorrichtung 9 aufnehmen. Der Wickelkern 11 ist derart ausgestaltet, dass die Berandungslinie einer senkrecht zur Rotationsachse 12 orientierten Schnittfläche des Wickelkerns 11 ein Polygon bildet, bei dieser Variante ein Rechteck mit abgerundeten Kanten, so dass der Wickelkern zwei Ablageflächen 17 aufweist.

Fig. 5 zeigt geeignete Ausführungen des Wickelkerns 11 in der Seitenansicht. Fig. 5a zeigt einen Wickelkern 11 mit einer dreieckigen Schnittfläche, der drei ebene Ablageflächen 17 für die Teiglage bietet. In diesem Fall würde es sich anbieten den Durchtrennvorgang 3 jeweils an den drei spitzen Ecken vorzunehmen, um dadurch drei unzusammenhängende Mehrlagenanordnungen zu erhalten. Eine ähnliche Ausführung zeigt Fig. 5b, einen Wickelkern 1 mit einer im Wesentlichen dreieckigen Schnittfläche mit abgerundeter Kante, wodurch der Teig ohne eine mögliche Beschädigung auf den Wickelkern 11 aufgewickelt werden kann. Fig. 5c zeigt einen Wickelkern 11 mit wenigstens zwei rechteckigen Ablageflächen 17 für die Teiglage und einer Schnittfläche in Form eines rechteckigen Polygons. Der Vorteil dieser Variante liegt darin, dass die Drehung 6 der Auswalzrichtung um einen Winkel von etwa 90°, inklusive des Wickelkerns 11 stattfinden kann, bevor die Teiglage von diesem getrennt in eine unzusammenhängende Mehrlagenanordnung überführt wird. Fig. 5d zeigt eine ähnliche Ausführung wie Fig. 5c, jedoch sind zwei gegenüberliegende Stirnflächen des Wickelkerns abgerundet. Dabei handelt es sich um die Stirnflächen, über die die hier nicht dargestellte Teiglage aufgewickelt wird; hierdurch kann gewährleistet werden, dass die Teiglage durch den Aufwickelvorgang nicht beschädigt wird.

Fig. 5e zeigt einen ähnlichen Wickelkern wie Fig. 5d, allerdings ist auf dem Wickelkern 11 ein Teigmitnehmer 22 angeordnet, der um den Wickelkern 11 bewegbar bzw. rotierbar gelagert ist. Der Teigmitnehmer ist dabei beispielsweise von einem - nicht dargestellten - Elektromotor angetrieben. Der Teigmitnehmer 22 weist eine - sich über seine gesamte Breite erstreckende - Befestigungslasche 23 auf, in die ein Ende einer Teiglage einspannbar ist, so dass die Teiglage - zumindest teilweise - mit dem Teigmitnehmer verbunden ist, um so auf einfache Weise der Bewegung des Teigmitnehmers um den Wickelkern zu folgen, so dass aus der Teiglage durch Aufwickeln eine zusammenhängende Mehrlagenanordnung entsteht. Bei der Variante eines Wickelkerns 11 mit Teigmitnehmer 22 gemäß Fig. 5e muss der Wickelkern 11 nicht um eine Rotationsachse 12 rotierbar sein, da die Rotationsbewegung durch den Teigmitnehmer 22 realisiert wird.

## Patentansprüche

1. Verfahren zur Herstellung von mehrlagigen Teigprodukten aus einer Teigmasse, das die folgenden Verfahrensschritte umfasst:
- das Auswalzen (1) der Teigmasse zu einer Teiglage (18),
- das Übereinanderlegen (2) der Teiglage (18) zu wenigstens einer zusammenhängenden Mehrlagenanordnung (19),
- das Durchtrennen (3) der zusammenhängenden Mehrlagenanordnung (19) zu wenigstens einer unzusammenhängenden Mehrlagenanordnung (20),
wobei die Teigmasse zunächst zu einer Teiglage (18) ausgewalzt (1) wird, anschließend die Teiglage (18) zu einer zusammenhängenden Mehrlagenanordnung (19) übereinandergelegt (2) wird, und nachfolgend die zusami menhängende Mehrlagenanordnung (19) durch einen Trennvorgang (3) in wenigstens eine unzusammenhängende Mehrlagenanordnung (20) überführt wird , **dadurch gekennzeichnet, dass** die unzusammenhängende Mehrlagenanordnung (20) ausgewalzt (4) wird, wobei das Auswalzen (4) der unzusammenhängenden Mehrlagenanordnung (19) in einer zur Auswalzrichtung der Teigmasse bzw. der Teiglage (18) abweichende Richtung erfolgt.

2. Verfahren nach Anspruch 1, **dadurch gekennzeichnet, dass** das Übereinanderlegen (2) der Teiglage (18) zu einer zusammenhängenden Mehrlagenanordnung (19) durch Aufwickeln (5) der Teiglage auf einen Wickelkern erfolgt.

3. Verfahren nach Anspruch 1, **dadurch gekennzeichnet, dass** die Teiglage (18) mäanderförmig zu einer zusammenhängenden Mehrlagenanordnung (19) übereinandergelegt (2} wird, insbesondere indem die Teiglage (18) von einer Förderebene im Wesentlichen vertikal auf eine Sammelfläche geführt wird, die in horizontaler Richtung oszillierend bewegt werden kann.

4. Verfahren nach einem der Ansprüche 1 bis 3, **dadurch** gekennzeichnet, dass die Drehung (6) der Auswalzrichtung zur ursprünglichen Auswalzrichtung um einen Winkel von im Wesentlichen 90° erfolgt.

## Claims

1. Method for producing multi-layer dough products from a dough mixture by means of the following process steps:
- rolling out (1) the dough mixture to form a sheet of dough (18),
- folding the sheet of dough (18) backwards and forwards over itself a number of times to form one or more continuous multi-layer arrangements (19),
- cutting through the continuous multi-layer arrangement (19) to form a discontinuous multi-layer arrangement (20),
where the dough mixture is first rolled out (1) to form a sheet of dough (18), the sheet of dough (18) is then folded backwards and forwards over itself a number of times (2) to form a continuous multi-layer arrangement (19) and the continuous multi-layer arrangement (19) is then cut through (3) to form one or more discontinuous multi-layer arrangements (20), **characterised in that** the discontinuous multi-layer arrangement (20) is rolled out and in a different direction from the one in which the dough mixture or the sheet of dough (18) is rolled out.

2. Method in accordance with claim 1, **characterised in that** the sheet of dough (18) is folded around itself a number of times (2) to form a continuous multi-layer arrangement (19) by winding (5) it onto a winding core.

3. Method in accordance with claim 1, **characterised in that** the sheet of dough (18) is folded backwards and forwards over itself a number of times (2) to form a continuous multi-layer arrangement (19), and especially by conveying the sheet of dough (18) essentially vertically from a conveying level onto a collecting surface that can be moved backwards and forwards in a horizontal direction.

4. Method in accordance with any one of claims 1 to 3, **characterised in that** the direction in which the dough is rolled out is set (6) at an angle of essentially 90° to the original direction of rolling out.

## Revendications

1. Procédé de fabrication de produits de pâte à plusieurs couches comprenant les étapes suivantes :
- l'abaissement au rouleau (1) de la pâte pour former une couche de pâte (18),
- la superposition (2) en accordéon de la couche de pâte (18) pour former un ensemble multicouches continu (19),
- le tranchage (3) de l'ensemble multicouches continu (19) pour former au moins un ensemble multicouches discontinu (20),
sachant que la pâte est d'abord abaissée au rouleau (1) pour donner une couche de pâte (18), qu'ensuite cette couche de pâte (18) est superposée (2) en accordéon pour former un ensemble multicouches continu (19), et qu'ensuite cet ensemble multicouches continu (19) est transformé en au moins un ensemble multicouches discontinu (20) par une opération de sectionnement (3), **caractérisé en ce que** l'ensemble multicouches discontinu (20) est abaissé au rouleau (4), sachant que l'abaissement au rouleau (4) de l'ensemble multicouches discontinu (20) a lieu dans un sens différent de celui que l'abaissement au rouleau de la pâte et/ou de la couche de pâte (18) avait conféré à cette dernière.

2. Procédé selon la revendication 1, **caractérisé en ce que** la superposition (2) en accordéon de la couche de pâte (18) pour former un ensemble multicouches continu (19) a lieu en enroulant (5) la couche de pâte sur un corps à cet effet.

3. Procédé selon la revendication 1, **caractérisé en ce que** la couche de pâte (18) est superposée (2) en méandres pour former un ensemble multicouches (19) continu, en particulier en amenant la couche de pâte (18) d'un niveau de transport essentiellement vertical sur une surface d'accumulation à laquelle il est possible d'imprimer des oscillations dans le sens horizontal.

4. Procédé selon l'une des revendications 1 à 3, **caractérisé en ce que** la rotation (6) du sens d'abaissement au rouleau par rapport au sens d'abaissement initial forme un angle d'essentiellement 90°.
